# FASCICULE DE BREVET EUROPEEN

(11) **EP 3 922 831 B1**
(45) Date de publication et mention de la délivrance du brevet: **03.08.2022**
(21) Numéro de dépôt: 21178846.8
(22) Date de dépôt: 10.06.2021
(51) Int. Cl.: F02C 7/36, F16H 1/28

(54) **RÉDUCTEUR MÉCANIQUE DE TURBOMACHINE D'AÉRONEF**
MECHANISCHES REDUKTIONSGETRIEBE FÜR TURBOTRIEBWERK EINES LUFTFAHRZEUGS
MECHANICAL GEAR FOR AIRCRAFT TURBINE ENGINE

(30) Priorité: 11.06.2020 FR 2006092
(43) Date de publication de la demande: 15.12.2021
(73) Titulaire: Safran Transmission Systems, 92700 Colombes (FR)
(72) Inventeur: BECK, Guillaume Julien, 77550 MOISSY-CRAMAYEL (FR); GHRIBI, Dhafer, 77550 MOISSY-CRAMAYEL (FR); LEFEBVRE, Simon Loïc Clément, 77550 MOISSY-CRAMAYEL (FR); PIGOTT, Quentin Pierre Henri, 77550 MOISSY-CRAMAYEL (FR); SIMON, Adrien Louis, 77550 MOISSY-CRAMAYEL (FR)
(74) Mandataire: Gevers & Orès

(56) Documents cités:
- EP-A1- 3 726 031
- WO-A2-2013/158179
- US-A- 3 307 433

## Description

### Domaine technique de l'invention

La présente invention concerne le domaine des réducteurs mécaniques pour des turbomachines en particulier d'aéronef.

### Arrière-plan technique

L'état de l'art comprend notamment les documents WO-A1-2010/092263, FR-A1-2 987 416, FR-A1-3 008 462, FR-A1-3 008 463, FR-A1-3 041 054, EP-A1 -3 726 031 (considéré état de la technique conformément à l'article 54(3) CBE) et US-A-3 307 433.

Le rôle d'un réducteur mécanique est de modifier le rapport de vitesse et de couple entre l'axe d'entrée et l'axe de sortie d'un système mécanique.

Les nouvelles générations de turbomachines à flux multiples, notamment celles ayant un haut taux de dilution, comportent un réducteur mécanique pour entraîner l'arbre d'une hélice (aussi appelé « fan »), par exemple de soufflante. De manière usuelle, le réducteur a pour but de transformer la vitesse de rotation dite rapide de l'arbre d'une turbine de puissance en une vitesse de rotation plus lente pour l'arbre entraînant la soufflante.

Un tel réducteur comprend un pignon central, appelé solaire, une couronne et des pignons appelés satellites, qui sont en prise entre le solaire et la couronne. Les satellites sont maintenus par un châssis appelé porte-satellites. Le solaire, la couronne et le porte-satellites sont des planétaires car leurs axes de révolution coïncident avec l'axe longitudinal X de la turbomachine. Les satellites ont des axes de révolution différents équirépartis sur le même diamètre de fonctionnement autour de l'axe des planétaires. Ces axes sont parallèles à l'axe longitudinal X.

II existe plusieurs architectures de réducteur. Dans l'état de l'art des turbomachines à flux multiple, les réducteurs sont de type planétaire ou épicycloïdal. Il existe dans d'autres applications similaires, des architectures dites différentielles ou « compound ».
- Sur un réducteur planétaire, le porte-satellites est fixe et la couronne constitue l'arbre de sortie du dispositif qui tourne dans le sens inverse du solaire.
- Sur un réducteur épicycloïdal, la couronne est fixe et le porte-satellites constitue l'arbre de sortie du dispositif qui tourne dans le même sens que le solaire.
- Sur un réducteur différentiel, aucun élément n'est fixé en rotation. La couronne tourne dans le sens contraire du solaire et du porte-satellites. Les réducteurs peuvent être composés de un ou plusieurs étages d'engrènement. Cet engrènement est assuré de différentes façons comme par contact, par friction ou encore par champs magnétique. II existe plusieurs types d'engrènement par contact comme avec des dentures droites, hélicoïdales ou en chevron.

L'augmentation des rapports de réduction des architectures des moteurs cibles pousse à utiliser des réducteurs dits « double étage ». En effet, au-delà d'un rapport de l'ordre de 6 ou 7, la technologie dite « simple étage » perd son intérêt car n'est plus assez compacte. II faut alors utiliser des réducteurs dits « double étage ».

Dans une technologie simple étage, c'est la même denture d'un satellite qui coopère avec le solaire et la couronne. Dans une technologie double étage, la denture du satellite qui coopère avec le solaire est différente de la denture du satellite qui coopère avec la couronne. En général, les dentures d'un satellite qui coopèrent respectivement avec le solaire et la couronne ont des diamètres moyens différents.

La principale problématique des réducteurs double étage (chaque étage ou denture comportant une seule série de dents) réside dans le fait qu'ils sont asymétriques par rapport à un plan perpendiculaire à l'axe X. Ainsi, la puissance rentrant à l'aval par l'intérieur et ressortant à l'amont par l'extérieur génère des moments non négligeables au niveau des satellites (les expressions « amont » et « aval » faisant référence à l'écoulement général des gaz dans la turbomachine).

Une solution à ce problème consiste à prévoir un arrangement symétrique des deux dentures par rapport à un plan perpendiculaire à l'axe X (chaque étage ou denture comportant une double série de dents). Ces deux dentures sont à chevrons, c'est-à-dire qu'elles comportent chacune une série de dents amont séparée axialement d'une série de dents aval. Les dents amont sont sensiblement parallèles entre elles et inclinées par rapport à l'axe X. Les dents aval sont également sensiblement parallèles entre elles et inclinées par rapport à l'axe X et par rapport aux dents amont de façon à ce que les dents amont et aval forment des chevrons tout autour du satellite. Dans une denture à chevrons, l'angle d'hélice des deux séries de dents a la même valeur (et une inclinaison opposée), de façon à ce que ces séries de dents génèrent des forces axiales opposées de même valeur.

Les dents amont et aval de la denture qui coopère avec le solaire sont séparées les unes des autres par une rainure annulaire. Dans la technique actuelle, les dents amont et aval de cette denture sont symétriques par rapport au plan précité, ce qui signifie que les lignes imaginaires passant par les sommets des dents amont et aval et longeant ces sommets se recoupent dans des points situés dans le plan de symétrie. Cela signifie également qu'une ligne imaginaire passant par le sommet d'une des dents amont, ou respectivement aval, passe par le sommet d'une des dents aval, ou respectivement amont.

Cette configuration présente un inconvénient lors de la fabrication du satellite et en particulier lors de la rectification des dents de sa denture d'engrènement avec le solaire. En effet, l'outil de rectification est déplacé sur et/ou entre les dents, dans des directions parallèles aux dents, et sur toute l'étendue axiale des dents. Pour éviter que l'outil vienne au contact des dents aval, ou respectivement amont, et les détériore lors de la rectification des dents amont (ou inversement aval), il est nécessaire de surdimensionner la rainure axiale inter-dents pour autoriser la fin de course et le retrait de l'outil.

Ce surdimensionnement axial se traduit par une augmentation de l'encombrement axial du satellite et donc du réducteur, ce qui est pénalisant. Un autre inconvénient de cette technologie à denture symétrique en chevron est d'avoir un positionnement axial fixé par chacun des couples de séries de dents, ce qui a pour effet :
- soit d'introduire de potentielles surcontraintes dans le réducteur, et ainsi de devoir le surdimensionner et ainsi aboutir à un réducteur plus grand et plus lourd ; cela est très impactant, notamment lorsque le nombre de satellites est supérieur à 3, puisque la répartition de charges est alors par nature moins homogène entre les satellites, et qu'il existe donc déjà un facteur important de surcontraintes à prendre en compte lié à ce phénomène ;
- soit d'imposer de laisser axialement libre le solaire, puisqu'à ce moment-là, la position axiale du premier étage est libérée, et les satellites peuvent s'aligner axialement avec la position de la denture d'engrènement avec la couronne, elle-même fixée par la position de la couronne ; cela se fait généralement par l'utilisation de cannelures capables de coulisser axialement pour lier le solaire à son arbre d'entrainement ; cette liaison présente des risques d'usure et peut aussi introduire de l'amortissement sur l'arbre d'entraînement du solaire, ce qui produit un effet négatif sur le comportement dynamique du réducteur et du moteur.

La présente invention propose un perfectionnement à cette technologie qui permet d'apporter une solution à au moins une partie des inconvénients évoqués ci-dessus, de manière simple, efficace et économique.

### Résumé de l'invention

L'invention concerne un réducteur mécanique de turbomachine selon la revendication 1.

Le parallélisme des dents amont et aval de la seconde denture signifie que ces dents sont droites et non pas en chevron, contrairement à l'art antérieur. L'utilisation d'une denture droite plutôt qu'en chevron est avantageuse pour résoudre le problème évoqué dans ce qui précède concernant la surcontrainte axiale des satellites. En effet, l'utilisation de la denture droite permet de ne pas figer la position axiale du satellite par la seconde denture et donc de limiter l'apparition de surcontraintes, puisque la denture droite permet un coulissement axial. Ainsi, les satellites peuvent s'aligner axialement sur le solaire uniquement. La position axiale du solaire peut donc être fixée, ce qui peut permettre d'éviter d'utiliser des cannelures rotulantes pour la liaison du solaire à son arbre d'entrainement car ces cannelures peuvent s'user et limiter la durée de vie du réducteur.

Le réducteur selon l'invention peut comprendre une ou plusieurs des caractéristiques suivantes, prises isolément les unes des autres, ou en combinaison les unes avec les autres :
- les dents amont et les dents aval de la première denture, et/ou les dents amont et les dents aval de la seconde denture, sont positionnées angulairement autour de l'axe de rotation du satellite de sorte à présenter un défaut de symétrie par rapport audit plan; les dents de la première denture ne sont ainsi pas symétriques par rapport au plan médian du satellite qui est perpendiculaire à l'axe de rotation du solaire, contrairement donc à l'état de la technique ; ce défaut de symétrie est utile pour l'étape de rectification des dents évoquée dans ce qui précède ; en effet, avec ce défaut de symétrie, le risque d'interaction entre l'outil de rectification et une dent est limité ; lors du déplacement de l'outil sur ou entre les dents d'une première série (amont ou aval), l'outil atteint la rainure inter-dents et se retrouve en face d'un espace inter-dents et non pas en face d'une dent de la seconde série (aval ou amont) ; la dimension axiale de la rainure inter-dents, qui sert à échapper l'outil de rectification, peut alors être réduite en conséquence, ce qui permet de réduire l'encombrement axial du satellite et donc du réducteur ;
- la première denture est du type à dents en chevron mais pourrait en variante être droite ; dans la présente demande, on entend par une denture à dents en chevron, une denture comportant deux séries de dents orientées dans des directions différentes ; les dents de la première série sont inclinées par rapport à l'axe autour duquel s'étend cette première série, et les dents de la seconde série sont inclinées différemment par rapport à cet axe ; les dents des deux séries sont ainsi inclinées les unes par rapport aux autres pour former des chevrons ; l'angle d'hélice des deux séries de dents a la même valeur et une inclinaison opposée ;
- les dents amont et les dents aval de la première denture comprennent chacune une arête de sommet et deux flancs latéraux, les dents amont et les dents aval de la première denture étant positionnées angulairement autour de l'axe de rotation du satellite de sorte que l'arête de sommet de chacune des dents amont soit située sur une ligne imaginaire qui passe par un des flancs d'une des dents aval ;
- les dents amont de la première denture sont situées à un pas les unes des autres, les dents aval de la première denture sont situées à un même pas les unes des autres, les dents amont de la première denture étant décalées angulairement d'un demi-pas par rapport aux dents aval de la première denture autour dudit axe de rotation du satellite ; ce décalage permet de libérer suffisamment d'espace pour l'outil de rectification, puisqu'en fin de rectification, cet outil est positionné en face d'un creux entre deux des dents opposées et donc on peut rapprocher les séries de dents sans risque d'interférence avec l'outil de rectification ; ainsi on peut gagner plusieurs millimètres sur l'encombrement axial du satellite et du réducteur ;

- les dents amont et les dents aval de la première denture sont séparées l'une de l'autre par une rainure annulaire située dans ledit plan ;
- les dents amont et les dents aval de la première denture sont parallèles entre elles et à l'axe de rotation du satellite, et se rejoignent au niveau dudit plan ;
- la couronne comprend une denture comportant des séries de dents amont et aval situées respectivement de part et d'autre dudit plan et séparées l'une de l'autre par la seconde denture, les dents amont et aval de la couronne étant parallèles entre elles et à l'axe de rotation du solaire ;
- le solaire comprend une denture, de préférence à dents en chevron, comportant des séries de dents amont et aval situées respectivement de part et d'autre dudit plan ;
- la denture du solaire est formée d'une seule pièce avec un arbre d'entraînement du solaire ;
- la denture du solaire est rapportée et fixée sur un arbre d'entraînement du solaire, l'arbre d'entrainement comportant des cannelures externes engagées dans des cannelures internes complémentaires du solaire ;
- un écrou annulaire est vissé sur une extrémité libre de l'arbre et prend appui axialement sur le solaire pour l'immobiliser axialement sur l'arbre ; l'écrou bloque ainsi les degrés de liberté du solaire par rapport à l'arbre ;
- la couronne est configurée pour être immobile en rotation autour dudit axe ; et le porte-satellites est configuré pour être mobile en rotation autour de cet axe ;
- la couronne est configurée pour être mobile en rotation autour dudit axe ; et le porte-satellites est configuré pour être immobile en rotation autour de cet axe.

L'invention concerne en outre une turbomachine, en particulier d'aéronef, comportant un réducteur mécanique tel que décrit ci-dessus.

### Brève description des figures

D'autres caractéristiques et avantages ressortiront de la description qui suit d'un mode de réalisation non limitatif de l'invention en référence aux dessins annexés sur lesquels :
[Fig.1] la figure 1 est une vue schématique en coupe axiale d'une turbomachine utilisant l'invention,
[Fig.2] la figure 2 est une vue partielle en coupe axiale d'un réducteur mécanique à simple étage d'engrènement, et illustre la technique antérieure à la présente invention,
[Fig.3] la figure 3 est une vue partielle en coupe axiale et en perspective d'un réducteur mécanique à double étage d'engrènement, et illustre la technique antérieure à la présente invention,
[Fig.4] la figure 4 est une autre vue schématique en coupe axiale du réducteur de la figure 3,
[Fig.5] la figure 5 est une vue partielle en coupe axiale et en perspective d'un réducteur mécanique à double étage d'engrènement, et illustre un mode de réalisation de l'invention,
[Fig.6] la figure 6 est une vue très schématique de dents d'une des dentures d'un satellite de réducteur,
[Fig.7] la figure 7 est une vue à plus grande échelle d'une partie de la figure 6 et montre un exemple de montage du solaire sur son arbre d'entrainement, et
[Fig.8] la figure 8 est une vue est schématique en perspective d'une partie de la première denture d'un satellite d'un réducteur selon l'invention.

### Description détaillée de l'invention

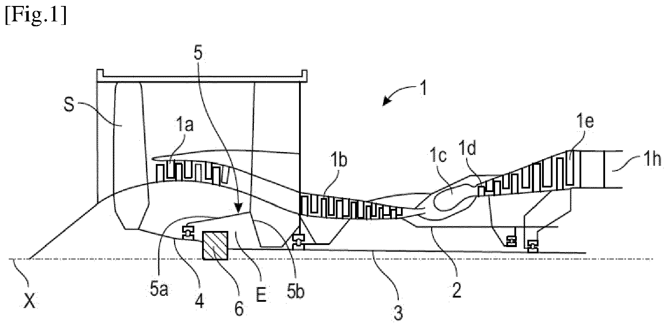

La figure 1 décrit une turbomachine 1 qui comporte, de manière classique, une soufflante S, un compresseur basse pression 1a, un compresseur haute pression 1b, une chambre annulaire de combustion 1c, une turbine haute pression 1d, une turbine basse pression 1e et une tuyère d'échappement 1h. Le compresseur haute pression 1b et la turbine haute pression 1d sont reliés par un arbre haute pression 2 et forment avec lui un corps haute pression (HP). Le compresseur basse pression 1a et la turbine basse pression 1e sont reliés par un arbre basse pression 3 et forment avec lui un corps basse pression (BP).

La soufflante S est entraînée par un arbre de soufflante 4 qui est entrainé par l'arbre BP 3 au moyen d'un réducteur 6. Ce réducteur 6 est généralement de type planétaire ou épicycloïdal.

La description qui suit concerne un réducteur du type épicycloïdal, dont le porte-satellites et le solaire sont mobiles en rotation, la couronne du réducteur étant fixe dans le repère du moteur.

Le réducteur 6 est positionné dans la partie amont de la turbomachine. Une structure fixe comportant schématiquement, ici, une partie amont 5a et une partie aval 5b qui compose le carter moteur ou stator 5 est agencée de manière à former une enceinte E entourant le réducteur 6. Cette enceinte E est ici fermée en amont par des joints au niveau d'un palier permettant la traversée de l'arbre de soufflante 4, et en aval par des joints au niveau de la traversée de l'arbre BP 3.

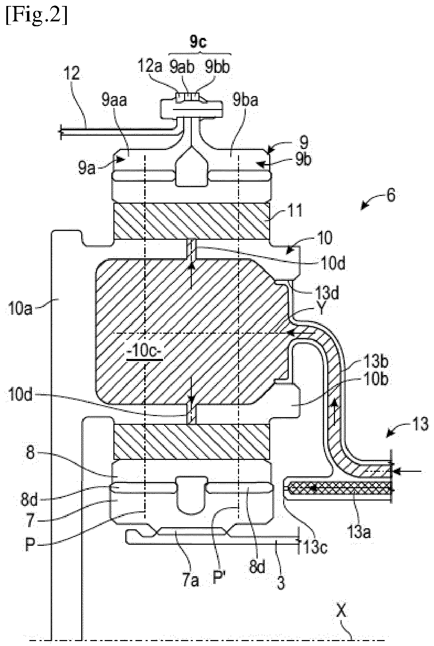

La figure 2 montre un réducteur épicycloïdal 6. En entrée, le réducteur 6 est relié à l'arbre BP 3, par exemple par l'intermédiaire de cannelures internes 7a. Ainsi, l'arbre BP 3 entraîne un pignon planétaire appelé le solaire 7. Classiquement, le solaire 7, dont l'axe de rotation est confondu avec celui de la turbomachine X, entraîne une série de pignons appelés satellites 8, qui sont équirépartis sur le même diamètre autour de l'axe de rotation X. Ce diamètre est égal au double de l'entraxe de fonctionnement entre le solaire 7 et les satellites 8. Le nombre de satellites 8 est généralement défini entre trois et sept pour ce type d'application.

L'ensemble des satellites 8 est maintenu par un châssis appelé porte-satellites 10. Chaque satellite 8 tourne autour de son propre axe Y, et engrène avec la couronne 9.

En sortie nous avons :
▪ Dans cette configuration épicycloïdale, l'ensemble des satellites 8 entraine en rotation le porte-satellite 10 autour de l'axe X de la turbomachine. La couronne est fixée au carter moteur ou stator 5 via un porte-couronne 12 et le porte-satellites 10 est fixé à l'arbre de soufflante 4.
▪ Dans une autre configuration planétaire, l'ensemble des satellites 8 est maintenu par un porte-satellites 10 qui est fixé au carter moteur ou stator 5. Chaque satellite entraine la couronne qui est rapportée à l'arbre de soufflante 4 via un porte-couronne 12.
▪ Dans une autre configuration différentielle, l'ensemble des satellites 8 est maintenu par un porte-satellites 10 qui est relié à un premier arbre de soufflante 5. Chaque satellite entraine la couronne qui est rapportée à un second arbre de soufflante contrarotatif 4 via un porte-couronne 12.

Chaque satellite 8 est monté libre en rotation à l'aide d'un palier 11, par exemple de type roulement ou palier hydrodynamique. Chaque palier 11 est monté sur un des axes 10b du porte-satellites 10 et tous les axes sont positionnés les uns par rapport aux autres à l'aide d'un ou plusieurs châssis structurels 10a du porte-satellites 10. Il existe un nombre d'axes 10b et de paliers 11 égal au nombre de satellites. Pour des raisons de fonctionnement, de montage, de fabrication, de contrôle, de réparation ou de rechange, les axes 10b et le châssis 10a peuvent être séparés en plusieurs pièces.

Pour les mêmes raisons citées précédemment, la denture d'un satellite peut être séparée en plusieurs hélices ou dents présentant chacun un plan médian P, P'. Dans notre exemple, nous détaillons le fonctionnement d'un réducteur dont chaque satellite comprend deux séries de dents en chevron coopérant avec une couronne séparée en deux demi-couronnes:
■ Une demi-couronne amont 9a constituée d'une jante 9aa et d'une demi-bride de fixation 9ab. Sur la jante 9aa se trouve l'hélice avant engrenée avec une hélice de la denture 8d de chaque satellite 8. L'hélice de la denture 8d engrène également avec celle du solaire 7.
▪ Une demi-couronne aval 9b constituée d'une jante 9ba et d'une demi-bride de fixation 9bb. Sur la jante 9ba se trouve l'hélice arrière engrenée avec une hélice de la denture 8d de chaque satellite 8. L'hélice de la denture 8d engrène également avec celle du solaire 7.

Si les largeurs d'hélice varient entre le solaire 7, les satellites 8 et la couronne 9 à cause des recouvrements de denture, elles sont toutes centrées sur un plan médian P pour les dents amont et sur un autre plan médian P' pour les dents aval.

La figure 2 illustre ainsi le cas d'un réducteur à simple étage d'engrènement, c'est-à-dire qu'une même denture 8d de chaque satellite 8 coopère à la fois avec le solaire 7 et la couronne 9. Même si la denture 8d comprend deux séries de dents, ces dents ont le même diamètre moyen et forment une seule et même denture appelée chevron.

La demi-bride de fixation 9ab de la couronne amont 9a et la demi-bride de fixation 9bb de la couronne aval 9b forment la bride de fixation 9c de la couronne. La couronne 9 est fixée à un porte-couronne en assemblant la bride de fixation 9c de la couronne et la bride de fixation 12a du porte-couronne à l'aide d'un montage boulonné par exemple.

Les flèches de la figure 2 décrivent l'acheminement de l'huile dans le réducteur 6. L'huile arrive dans le réducteur 6 depuis la partie stator 5 dans un distributeur 13 par différents moyens qui ne seront pas précisés dans cette vue car ils sont spécifiques à un ou plusieurs types d'architecture. Le distributeur 13 comprend des injecteurs 13a et des bras 13b. Les injecteurs 13a ont pour fonction de lubrifier les dentures et les bras 13b ont pour fonction de lubrifier les paliers. L'huile est amenée vers l'injecteur 13a pour ressortir par l'extrémité 13c afin de lubrifier les dentures. L'huile est également amenée vers le bras 13b et circule via la bouche d'alimentation 13d du palier. L'huile circule ensuite à travers l'axe dans une ou des zones tampons 10c pour ensuite ressortir par les orifices 10d afin de lubrifier les paliers des satellites.

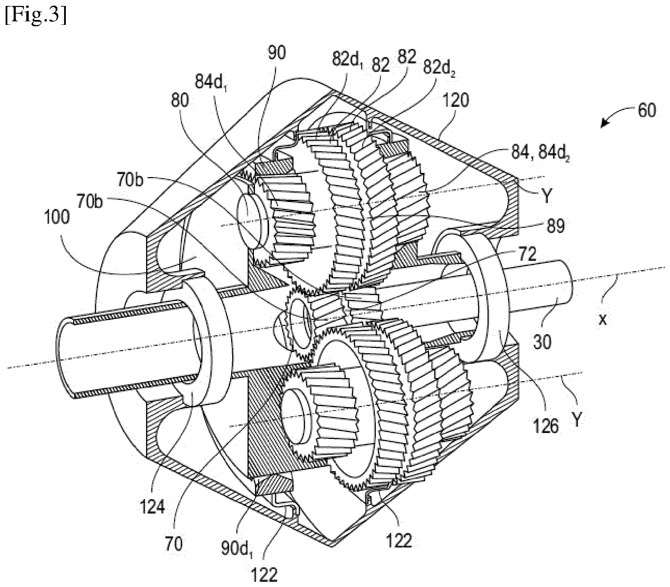

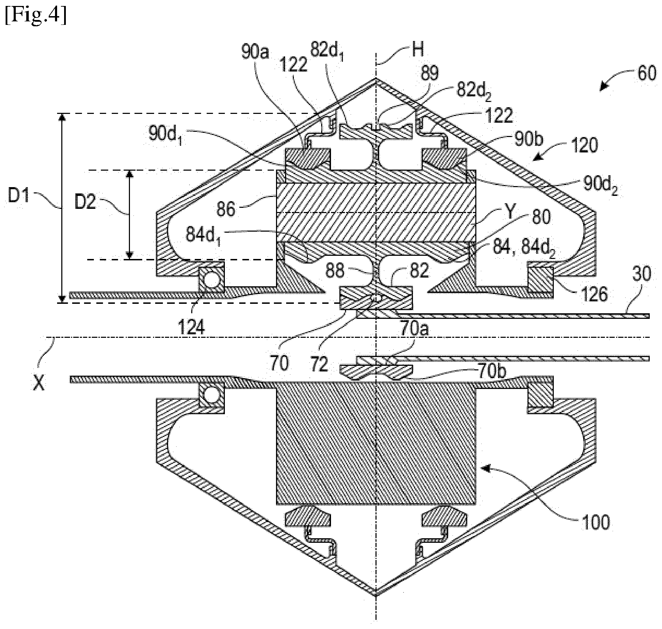

Les figures 3 et 4 montrent un autre exemple d'architecture de réducteur, dit à double étage d'engrènement, qui comprend :
- un solaire 70 ayant un axe de rotation X,
- une couronne 90 qui s'étend autour du solaire et qui est configurée pour être immobile en rotation autour de l'axe X, et
- des satellites 80 qui sont engrenés avec le solaire 70 et la couronne 90 et qui sont maintenus par un porte-satellites 100 qui est configuré pour être mobile en rotation autour de l'axe X.

On définit le plan H comme étant un plan médian perpendiculaire à l'axe X et passant sensiblement au milieu du réducteur 60 (figure 4).

Le solaire 70 comprend des cannelures internes 70a d'accouplement avec l'arbre BP 30 ainsi qu'une denture externe 70b d'engrènement avec les satellites 80. La denture 70b présente deux séries de dents adjacentes en chevron, séparées l'une de l'autre par une rainure annulaire 72 orientée radialement vers l'extérieur. La denture 70b est symétrique par rapport au plan H, ses dents étant situées de part et d'autre du plan H qui passe par la rainure 72.

La couronne 90 est formée par deux anneaux indépendants 90a, 90b et comprend une denture qui est séparée en deux séries de dents 90d1, 90d2 en chevron portées respectivement par les deux anneaux.

Les anneaux 90a, 90b sont disposés de manière symétrique par rapport au plan H qui s'étend donc entre ces anneaux. Les anneaux sont reliés et fixés à un porte-couronne 120 par l'intermédiaire de flasques annulaires 122 de liaison. Les flasques 122 sont indépendants l'un de l'autre, chaque flasque ayant en demi section axiale une forme générale en S lui procurant une certaine souplesse radiale par déformation élastique en fonctionnement. Chaque anneau 90a, 90b s'étend autour de l'axe X et est fixé au flasque 122 correspondant par sa périphérie externe. Sa périphérie interne comprend une des dents 90d1, 90d2.

Le porte couronne 120 a une forme générale annulaire autour de l'axe X et plus particulièrement biconique. Il comprend ainsi un premier tronçon amont ou à gauche sur le dessin, avec une extrémité amont de plus petit diamètre, et une extrémité aval de plus grand diamètre qui est reliée à l'extrémité amont de plus grand diamètre de l'autre tronçon, aval ou à droite sur le dessin. Les extrémités de plus grand diamètre des tronçons sont donc reliées entre elles, et leurs extrémités de plus petits diamètres forment les extrémités axiales du porte-couronne.

L'extrémité amont du porte-couronne 120 s'étend autour du porte-satellites 100 ou d'un arbre relié à ce porte-satellites, et est centré et guidé en rotation sur le porte-satellite ou l'arbre par l'intermédiaire d'au moins un palier 124. De la même façon, l'extrémité aval du porte-couronne 120 s'étend autour du porte-satellites 100 ou d'un arbre relié à ce porte-satellites, et est centré et guidé en rotation sur le porte-satellite ou l'arbre par l'intermédiaire d'au moins un autre palier 126.

Comme c'est le cas de la couronne 90, le porte-couronne 120 présente une symétrie par rapport au plan H qui coupe le porte-couronne en son milieu et passe donc par les extrémités de plus grand diamètre des tronçons précités. Chaque satellite 80 comporte une première denture 82 de diamètre moyen D1 pour l'engrènement avec le solaire 70, et une seconde denture 84 de diamètre moyen D2, différent de D1 et en particulier inférieur à D1, pour l'engrènement avec la couronne 90. Les diamètres moyens sont mesurés depuis l'axe Y de chaque satellite et représente la moyenne entre le diamètre maximal et le diamètre minimal d'une denture de ce satellite.

Chaque satellite 80 comprend un corps cylindrique 86 et un voile annulaire 88 s'étendant sensiblement radialement vers l'extérieur depuis le milieu de ce corps 86. La denture 84 est séparée en deux séries de dents 84d1, 84d2 en chevron qui sont situées respectivement sur les extrémités axiales du corps 86. La denture 82 comprend deux séries de dents 82d1, 82d2 en chevron qui sont situées à la périphérie externe du voile 88 et qui sont séparées l'une de l'autre par une rainure annulaire 89 débouchant radialement vers l'extérieur par rapport à l'axe Y.

La denture 82 est traversée en son milieu par le plan H qui passe par la rainure 89, les dents 82d1, 82d2 étant donc disposées de part et d'autre du plan H. Les dents 84d1, 84d2 sont également disposées de manière symétrique par rapport au plan H.

La denture 82 et la périphérie externe du voile 88 ont une dimension axiale qui est inférieure à la distance axiale entre les anneaux 90a, 90b, ainsi qu'entre les flasques 122, de façon à ce que chaque satellite 80 puisse librement tourner dans le porte-couronne 120 et entre les anneaux 90a, 90b et les flasques 122.

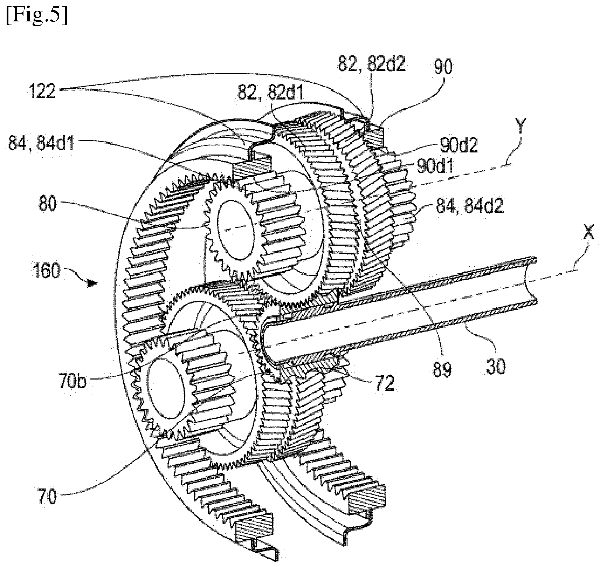

Cette architecte présente quelques inconvénients qui sont résolus par les perfectionnements apportés par le réducteur 160 selon l'invention, dont un mode de réalisation est représenté à la figure 5.

Les éléments décrits dans ce qui précède en relation avec les figures 3 et 4 sont désignés par les mêmes références dans la figure 5. La description qui précède faite en relation avec les figures 3 et 4 s'applique donc au mode de réalisation de la figure 5 dans la mesure où elle ne contredit pas ou n'est pas remplacée par ce qui suit.

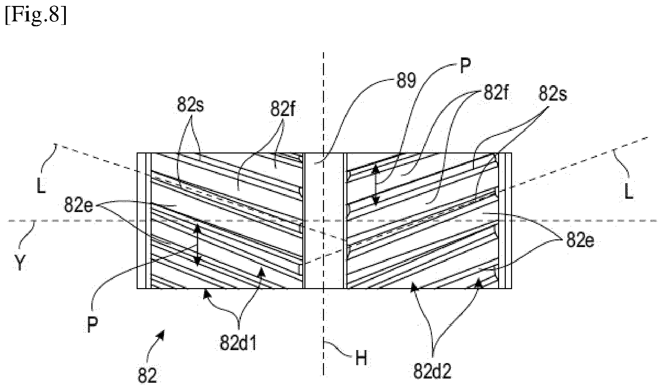

Un premier perfectionnement du réducteur 160 concerne les dents 82d1, 82d2 de la première denture 82. Cette première denture 82 est en chevron comme dans le réducteur 60 des figures 3 et 4. Toutefois, contrairement au réducteur 60 des figures 3 et 4, les dents 82d1, 82d2 de cette denture 82 ne sont pas symétriques par rapport au plan H. Au contraire, les dents amont 82d1 sont décalées angulairement autour de l'axe Y par rapport aux dents aval 82d2 dans le réducteur 160 selon l'invention, comme cela est représenté à la figure 8.

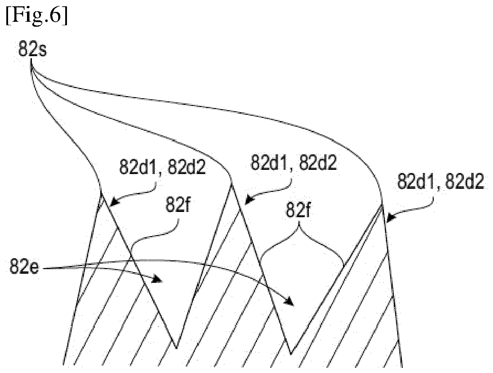

La figure 6 est une représentation très schématique de dents 82d1, 82d2 de la denture 82. Chaque dent 82d1, 82d2 comprend un sommet 82s présentant une arête de forme générale rectiligne. Chaque dent 82d1, 82d2 comprend également deux flancs latéraux 82f s'étendant depuis le sommet 82s ou l'arête de sommet vers les espaces inter-dents 82e. Comme cela est schématiquement illustré, chaque dent 82d1, 82d2 a en section transversale une forme générale triangulaire ou trapézoïdale.

Les dents amont 82d1 et les dents aval 82d2 de la première denture 82 sont positionnées angulairement autour de l'axe Y de sorte que l'arête du sommet 82s de chacune des dents amont 82d1 soit située sur une ligne imaginaire L qui passe par un des flancs 82f d'une des dents aval 82d2 (cf. figure 8). Les dents amont 82d1 sont situées à un pas P les unes des autres. Les dents aval 82d2 sont situées à un même pas P les unes des autres. Les dents amont 82d1 sont de préférence décalées angulairement d'un demi-pas par rapport aux dents aval 82d2 autour de l'axe Y de rotation du satellite 80. Ce décalage permet de libérer suffisamment d'espace pour l'outil de rectification, puisqu'en fin de rectification, cet outil est positionné en face d'un creux ou espace 82e entre deux dents adjacentes. II est donc possible rapprocher les séries de dents 82d1, 82d2 l'une de l'autre sans risque d'interférence avec l'outil de rectification, en réduisant la dimension axiale de la rainure 89 située entre les séries de dents. On peut ainsi gagner plusieurs millimètres sur l'encombrement axial du satellite 80 et du réducteur 160. Un autre perfectionnement du réducteur 160 concerne la seconde denture 84 qui n'est plus en chevron mais qui est au contraire droite (cf. figure 5). Cette denture 84 comprend des dents amont 84d1 et des dents aval 84d2 qui sont parallèles entre elles et à l'axe Y de rotation du satellite 80. Cette seconde denture 84 est donc bien symétrique par rapport au plan H précité (qui passe à travers la rainure 89 et est perpendiculaire à l'axe X) contrairement à la première denture 82.

L'utilisation d'une denture 84 droite plutôt qu'en chevron est avantageuse pour résoudre le problème évoqué dans ce qui précède concernant la surcontrainte axiale des satellites 80. L'utilisation de la denture 84 droite permet en effet de ne pas figer la position axiale du satellite 80 par cette denture 84 et donc de limiter l'apparition de surcontraintes, puisque la denture 84 droite permet un coulissement axial du satellite vis-à-vis de la couronne 90.

Ainsi, les satellites 80 peuvent s'aligner axialement sur le solaire 70 uniquement et la position axiale du solaire peut donc être fixée.

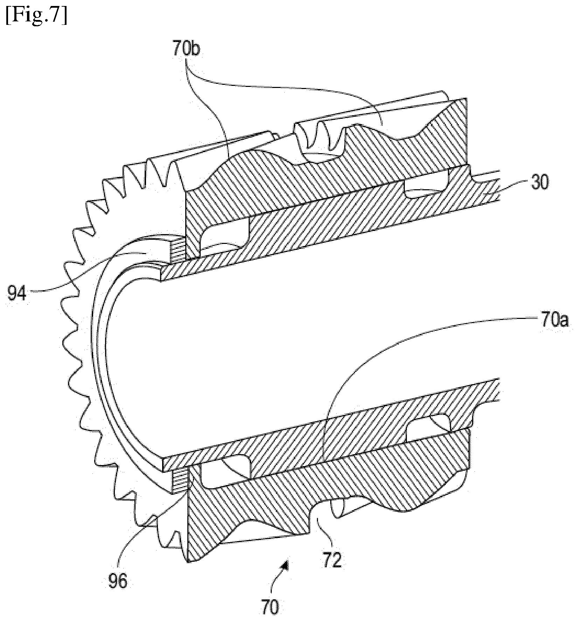

Le solaire 70, mieux visible à la figure 7, comprend une denture 70b à dents en chevron qui est complémentaire des dentures 82 des satellites 80 en vue de leur engrènement. Cette denture 70b comporte donc des dents amont et aval situées respectivement de part et d'autre du plan H et séparées l'une de l'autre par la rainure 72. Du fait de la complémentarité de cette denture 70b avec les dentures 82 des satellites, les séries de dents de la denture 70b présentent également un défaut de symétrie par rapport au plan H.

Le solaire 70 et sa denture 70b peuvent être formés d'une seule pièce avec l'arbre BP 30. Dans la variante qui est représentée, le solaire 70 est rapporté et fixé sur l'arbre BP 30.

Dans cette variante, l'arbre BP 30 comprend des cannelures externes engagées dans des cannelures internes 70a complémentaires du solaire 70 et un écrou annulaire 94 est vissé sur une extrémité libre de l'arbre BP 30 et prend appui axialement sur le solaire pour l'immobiliser axialement sur l'arbre. Le solaire 70 comprend par exemple un rebord annulaire interne 96 qui est serré axialement entre l'écrou 94 et un épaulement annulaire (non représenté) de l'arbre BP 30. L'écrou 94 bloque ainsi les degrés de liberté du solaire 70 par rapport à l'arbre BP 30.

La couronne 90 du réducteur 160 est similaire à celle du réducteur 60 à l'exception du fait que les dents 90d1, 90d2 de sa denture 90 sont droites et donc parallèles entre elles et à l'axe X.

Les perfectionnements évoqués ci-dessus peuvent être utilisés indépendamment l'un de l'autre ou en combinaison l'un avec l'autre. D'autres perfectionnements sont envisageables.

Les dents 84d1, 84d2 de la denture 84 pourraient être décalées angulairement les unes vis-à-vis des autres autour de l'axe Y de chaque satellite 80. Ce décalage pourrait être utilisé seul ou en combinaison avec le décalage des dents 82d1, 82d2 de la denture 82.

Dans une autre variante non représentée du réducteur selon l'invention, la denture 82 de chaque satellite 80 pourrait également être droite. On comprend dès lors que la denture 70b du solaire serait également droite. La denture 84 de chaque satellite 80 pourrait être droite, comme évoqué ci-dessus, ou à dents en chevron. Dans cette configuration, les dents 82d1, 82d2 de la denture 82 droite pourraient être séparées l'une de l'autre par la rainure 89 précitée ou bien se rejoindre au niveau du plan H.

Le réducteur 160 selon l'invention est notamment compatible :
- d'une utilisation « épicycloïdale » à porte-satellites tournant et couronne fixe ;
- d'une utilisation « planétaire » à couronne tournante et porte-satellites fixe
- d'une utilisation « différentiel » à couronne et porte-satellites tournants.
- de paliers à éléments roulants et également de paliers hydrodynamiques
- d'un porte-satellite monobloc ou en plusieurs parties.

## Revendications

1. Réducteur mécanique (160) de turbomachine (1), en particulier d'aéronef, ce réducteur comportant :
- un solaire (70) ayant un axe (X) de rotation,
- une couronne (90) qui s'étend autour du solaire (70),
- des satellites (80) qui sont engrenés avec le solaire (70) et la couronne (90) et qui sont maintenus par un porte-satellites (100), chaque satellite (80) ayant un axe (Y) de rotation et comportant une première denture (82) de diamètre moyen D1 pour l'engrènement avec le solaire (70), et une seconde denture (84) de diamètre moyen D2, différent de D1, pour l'engrènement avec la couronne (90),
la première denture (82) comportant une série de dents amont (82d1) et une série de dents aval (82d2) qui sont situés de part et d'autre d'un plan (H) perpendiculaire à l'axe (X) de rotation du solaire (70) et passant sensiblement au milieu du satellite (80),
la seconde denture (84) comportant une série de dents amont (84d1) et une série de dents aval (84d2) situées de part et d'autre dudit plan (H) et séparées l'une de l'autre par ladite première denture (82),
**caractérisé en ce que** les dents amont (84d1) et les dents aval (84d2) de la seconde denture (84) sont droites, donc parallèles entre elles et à l'axe (Y) de rotation du satellite (80).

2. Réducteur mécanique (160) selon la revendication précédente, dans lequel les dents amont (82d1) et les dents aval (82d2) de la première denture (82), et/ou les dents amont (84d1) et les dents aval (84d2) de la seconde denture (84), sont positionnées angulairement autour de l'axe (Y) de rotation du satellite (80) de sorte à présenter un défaut de symétrie par rapport audit plan (H).

3. Réducteur mécanique (160) selon la revendication 1 ou 2, dans lequel la première denture (82) est du type à dents en chevron.

4. Réducteur mécanique (160) selon la revendication 3, en dépendance de la revendication 2, dans lequel les dents amont (82d1) et les dents aval (82d2) de la première denture (82) comprennent chacune une arête de sommet et deux flancs latéraux, les dents amont (82d1) et les dents aval (82d2) de la première denture (82) étant positionnées angulairement autour de l'axe (Y) de rotation du satellite (80) de sorte que l'arête de sommet de chacune des dents amont (82d1) soit située sur une ligne imaginaire qui passe par un des flancs d'une des dents aval (82d2).

5. Réducteur mécanique (160) selon la revendication 4, dans lequel les dents amont (82d1) de la première denture (82) sont situées à un pas (P) les unes des autres, les dents aval (82d2) de la première denture (82) sont situées à un même pas (P) les unes des autres, les dents amont (82d1) de la première denture (82) étant décalées angulairement d'un demi-pas par rapport aux dents aval (82d2) de la première denture (82) autour dudit axe (Y) de rotation du satellite (80).

6. Réducteur mécanique (160) selon l'une des revendications précédentes, dans lequel les dents amont (82d1) et les dents aval (82d2) de la première denture (82) sont séparées l'une de l'autre par une rainure annulaire située dans ledit plan (H).

7. Réducteur mécanique (160) selon la revendication 1 ou 2, dans lequel les dents amont (82d1) et les dents aval (82d2) de la première denture (82) sont parallèles entre elles et à l'axe (Y) de rotation du satellite (80), et se rejoignent au niveau dudit plan (H).

8. Réducteur mécanique (160) selon l'une des revendications précédentes, dans lequel la couronne (90) comprend une denture comportant des séries de dents (90d1, 90d2) amont et aval situées respectivement de part et d'autre dudit plan (H) et séparées l'une de l'autre par la seconde denture (84), les dents amont et aval (90d1, 90d2) de la couronne (90) étant parallèles entre elles et à l'axe (X) de rotation du solaire (70).

9. Réducteur mécanique (160) selon l'une des revendications précédentes, dans lequel le solaire (70) comprend une denture (70b) comportant des séries de dents amont et aval situées respectivement de part et d'autre dudit plan (H).

10. Réducteur mécanique (160) selon la revendication 9, dans lequel la denture du solaire (70) est formée d'une seule pièce avec un arbre (30) d'entraînement du solaire.

11. Réducteur mécanique (160) selon la revendication 9, dans lequel la denture du solaire (70) est rapportée et fixée sur un arbre (30) d'entraînement du solaire, l'arbre d'entrainement (30) comportant des cannelures externes engagées dans des cannelures internes (70a) complémentaires du solaire (70).

12. Réducteur mécanique (160) selon la revendication précédente, dans lequel un écrou annulaire (94) est vissé sur une extrémité libre de l'arbre (30) et prend appui axialement sur le solaire (70) pour l'immobiliser axialement sur l'arbre (30).

13. Turbomachine (1), en particulier d'aéronef, comportant un réducteur mécanique (160) selon l'une des revendications précédentes.

14. Turbomachine selon la revendication 13, dans laquelle la couronne (90) du réducteur mécanique (160) est immobile en rotation autour dudit axe, et le porte-satellites (100) est mobile en rotation autour de l'axe (X).

15. Turbomachine selon la revendication 13, dans laquelle la couronne (90) du réducteur mécanique (160) est mobile en rotation autour dudit axe, et le porte-satellites (100) est immobile en rotation autour de l'axe (X)

## Patentansprüche

1. Mechanisches Untersetzungsgetriebe (160) einer Turbomaschine (1), insbesondere eines Luftfahrzeugs, wobei dieses Untersetzungsgetriebe umfasst:
- ein Sonnenrad (70) mit einer Drehachse (X),
- eine Krone (90), die sich um das Sonnenrad (70) erstreckt,
- Planetenräder (80), die mit dem Sonnenrad (70) und dem Hohlrad (90) in Eingriff stehen und die von einem Planetenträger (100) gehalten werden, wobei jedes Planetenrad (80) eine Drehachse (Y) hat und eine erste Verzahnung (82) mit einem mittleren Durchmesser D1 für den Eingriff mit dem Sonnenrad (70) und eine zweite Verzahnung (84) mit einem mittleren Durchmesser D2, der sich von D1 unterscheidet, für den Eingriff mit dem Hohlrad (90) umfasst,
wobei die erste Verzahnung (82) eine Reihe vorgelagerter Zähne (82d1) und eine Reihe nachgelagerter Zähne (82d2) umfasst, die sich zu beiden Seiten einer Ebene (H) befinden, welche senkrecht zur Drehachse (X) des Sonnenrads (70) verläuft und im Wesentlichen durch die Mitte des Planetenrads (80) verläuft,
wobei die zweite Verzahnung (84) eine Reihe vorgelagerter Zähne (84d1) und eine Reihe nachgelagerter Zähne (84d2) umfasst, die sich zu beiden Seiten der Ebene (H) befinden und durch die erste Verzahnung (82) voneinander getrennt sind,
**dadurch gekennzeichnet, dass** die vorgelagerten Zähne (84d1) und die nachgelagerten Zähne (84d2) der zweiten Verzahnung (84) gerade sind, das heißt parallel zueinander und zur Drehachse (Y) des Planetenrads (80) verlaufen.

2. Mechanisches Untersetzungsgetriebe (160) nach dem vorstehenden Anspruch, wobei die vorgelagerten Zähne (82d1) und die nachgelagerten Zähne (82d2) der ersten Verzahnung (82) und/oder die vorgelagerten Zähne (84d1) und die nachgelagerten Zähne (84d2) der zweiten Verzahnung (84) winkelmäßig um die Drehachse (Y) des Planetenrads (80) so positioniert sind, dass sie einen Symmetriefehler in Bezug auf die Ebene (H) aufweisen.

3. Mechanisches Untersetzungsgetriebe (160) nach Anspruch 1 oder 2, wobei die erste Verzahnung (82) in der Art pfeilgezahnt ist.

4. Mechanisches Untersetzungsgetriebe (160) nach Anspruch 3 in Abhängigkeit von Anspruch 2, wobei die vorgelagerten Zähne (82d1) und die nachgelagerten Zähne (82d2) der ersten Verzahnung (82) jeweils eine Scheitelkante und zwei Seitenflanken umfassen, wobei die vorgelagerten Zähne (82d1) und die nachgelagerten Zähne (82d2) der ersten Verzahnung (82) winkelmäßig um die Drehachse (Y) des Planetenrads (80) so positioniert sind, dass die Scheitelkante jedes der vorgelagerten Zähne (82d1) auf einer imaginären Linie liegt, die durch eine der Flanken eines der nachgelagerten Zähne (82d2) verläuft.

5. Mechanisches Untersetzungsgetriebe (160) nach Anspruch 4, wobei die vorgelagerten Zähne (82d1) der ersten Verzahnung (82) in einem Abstand (P) zueinander angeordnet sind, die nachgelagerten Zähne (82d2) der ersten Verzahnung (82) in einem gleichen Abstand (P) zueinander angeordnet sind, wobei die vorgelagerten Zähne (82d1) der ersten Verzahnung (82) winkelmäßig um einen halben Abstand zu den nachgelagerten Zähnen (82d2) der ersten Verzahnung (82) um die Drehachse (Y) des Planetenrads (80) versetzt sind.

6. Mechanisches Untersetzungsgetriebe (160) nach einem der vorstehenden Ansprüche, wobei die vorgelagerten Zähne (82d1) und die nachgelagerten Zähne (82d2) der ersten Verzahnung (82) durch eine ringförmige Nut voneinander getrennt sind, die in der Ebene (H) liegt.

7. Mechanisches Untersetzungsgetriebe (160) nach Anspruch 1 oder 2, wobei die vorgelagerten Zähne (82d1) und die nachgelagerten Zähne (82d2) der ersten Verzahnung (82) parallel zueinander und zur Drehachse (Y) des Planetenrads (80) sind und sich in der Ebene (H) treffen.

8. Mechanisches Untersetzungsgetriebe (160) nach einem der vorstehenden Ansprüche, wobei das Hohlrad (90) eine Verzahnung mit Reihen von vorgelagerten und nachgelagerten Zähnen (90d1, 90d2) umfasst, die sich jeweils zu beiden Seiten der Ebene (H) befinden und durch die zweite Verzahnung (84) voneinander getrennt sind, wobei die vorgelagerten und nachgelagerten Zähne (90d1, 90d2) des Hohlrads (90) parallel zueinander und zur Drehachse (X) des Sonnenrads (70) verlaufen.

9. Mechanisches Untersetzungsgetriebe (160) nach einem der vorstehenden Ansprüche, wobei das Sonnenrad (70) eine Verzahnung (70b) mit Reihen vorgelagerter und nachgelagerter Zähne umfasst, die sich jeweils zu beiden Seiten der Ebene (H) befinden.

10. Mechanisches Untersetzungsgetriebe (160) nach Anspruch 9, wobei die Verzahnung des Sonnenrads (70) einstückig mit einer Antriebswelle (30) des Sonnenrads ausgebildet ist.

11. Mechanisches Untersetzungsgetriebe (160) nach Anspruch 9, wobei die Verzahnung des Sonnenrads (70) auf eine Antriebswelle (30) des Sonnenrads aufgesetzt und an dieser befestigt ist, wobei die Antriebswelle (30) äußere Keilverzahnungen aufweist, die in komplementäre innere Keilverzahnungen (70a) des Sonnenrads (70) eingreifen.

12. Mechanisches Untersetzungsgetriebe (160) nach dem vorstehenden Anspruch, wobei eine ringförmige Mutter (94) auf ein freies Ende der Welle (30) geschraubt ist und in Axialrichtung an dem Sonnenrad (70) anliegt, um es in Axialrichtung auf der Welle (30) zu fixieren.

13. Turbomaschine (1), insbesondere eines Luftfahrzeugs, mit einem mechanischen Untersetzungsgetriebe (160) nach einem der vorstehenden Ansprüche.

14. Turbomaschine nach Anspruch 13, wobei das Hohlrad (90) des mechanischen Untersetzungsgetriebes (160) um die Achse nicht drehbar ist und der Planetenträger (100) um die Achse (X) drehbar ist.

15. Turbomaschine nach Anspruch 13, wobei das Hohlrad (90) des mechanischen Untersetzungsgetriebes (160) um die Achse drehbar ist und der Planetenträger (100) um die Achse (X) nicht drehbar ist.

## Claims

1. A mechanical gearbox (160) for a turbomachine (1), in particular of an aircraft, this gearbox comprising:
- a sun gear (70) having an axis (X) of rotation,
- a ring gear (90) which extends around the sun gear (70),
- planet gears (80) which are meshed with the sun gear (70) and the ring gear (90) and which are held by a planet carrier (100), each planet gear (80) having an axis (Y) of rotation and comprising a first toothing (82) with a mean diameter D1 for meshing with the sun gear (70), and a second toothing (84) with a mean diameter D2, which is different from D1, for meshing with the ring gear (90),
the first toothing (82) comprising a series of upstream teeth (82d1) and a series of downstream teeth (82d2) which are located on either side of a plane (H) perpendicular to the axis (X) of rotation of the sun gear (70) and passing substantially through the middle of the planet gear (80),
the second toothing (84) comprising a series of upstream teeth (84d1) and a series of downstream teeth (84d2) located on either side of said plane (H) and separated from each other by said first toothing (82),
**characterised in that** the upstream teeth (84d1) and the downstream teeth (84d2) of the second toothing (84) are straight, therefore parallel to each other and to the axis (Y) of rotation of the planet gear (80).

2. The mechanical gearbox (160) according to the preceding claim, wherein the upstream teeth (82d1) and the downstream teeth (82d2) of the first toothing (82), and/or the upstream teeth (84d1) and the downstream teeth (84d2) of the second toothing (84), are angularly positioned about the axis (Y) of rotation of the planet gear (80) so as to present a symmetry fault with respect to said plane (H).

3. The mechanical gearbox (160) according to claim 1 or 2, wherein the first toothing (82) is of the herringbone tooth type.

4. The mechanical gearbox (160) according to claim 3, in dependence on claim 2, wherein the upstream teeth (82d1) and the downstream teeth (82d2) of the first toothing (82) each comprise an apex ridge and two lateral flanks, the upstream teeth (82d1) and the downstream teeth (82d2) of the first toothing (82) being angularly positioned about the axis (Y) of rotation of the planet gear (80) such that the apex ridge of each of the upstream teeth (82d1) is located on an imaginary line that passes through one of the flanks of one of the downstream teeth (82d2).

5. The mechanical gearbox (160) according to claim 4, wherein the upstream teeth (82d1) of the first toothing (82) are located at a pitch (P) from each other, the downstream teeth (82d2) of the first toothing (82) are located at the same pitch (P) from each other, the upstream teeth (82d1) of the first toothing (82) being angularly offset by half a pitch with respect to the downstream teeth (82d2) of the first toothing (82) about said axis (Y) of rotation of the planet gear (80).

6. The mechanical gearbox (160) according to any of the preceding claims, wherein the upstream teeth (82d1) and the downstream teeth (82d2) of the first toothing (82) are separated from each other by an annular groove located in said plane (H).

7. The mechanical gearbox (160) according to claim 1 or 2, wherein the upstream teeth (82d1) and the downstream teeth (82d2) of the first toothing (82) are parallel to each other and to the axis (Y) of rotation of the planet gear (80), and meet at the level of said plane (H).

8. The mechanical gearbox (160) according to one of the preceding claims, wherein the ring gear (90) comprises a toothing comprising series of upstream and downstream teeth (90d1, 90d2) located respectively on either side of said plane (H) and separated from each other by the second toothing (84), the upstream and downstream teeth (90d1, 90d2) of the ring gear (90) being parallel to each other and to the axis (X) of rotation of the sun gear (70).

9. The mechanical gearbox (160) according to one of the preceding claims, wherein the sun gear (70) comprises a toothing (70b) comprising series of upstream and downstream teeth located respectively on either side of said plane (H).

10. The mechanical gearbox (160) according to claim 9, wherein the toothing of the sun gear (70) is formed in one piece with a shaft (30) for driving the sun gear.

11. The mechanical gearbox (160) according to claim 9, wherein the toothing of the sun gear (70) is fitted and secured to a shaft (30) for driving the sun gear, the driving shaft (30) comprising external splines engaged with complementary internal splines (70a) of the sun gear (70).

12. The mechanical gearbox (160) according to the preceding claim, wherein an annular nut (94) is screwed onto a free end of the shaft (30) and bears axially on the sun gear (70) to immobilise it axially on the shaft (30).

13. A turbomachine (1), in particular of an aircraft, comprising a mechanical gearbox (160) according to any of the preceding claims.

14. The turbomachine according to claim 13, wherein the ring gear (90) of the mechanical gearbox (160) is rotationally immovable about said axis, and the planet carrier (100) is rotationally movable about the axis (X).

15. The turbomachine according to claim 13, wherein the ring gear (90) of the mechanical gearbox (160) is rotationally movable about said axis, and the planet carrier (100) is rotationally immovable about the axis (X).
